# EUROPEAN PATENT APPLICATION

(11) **EP 0 796 782 A2**
(43) Date of publication of application: **24.09.1997**
(21) Application number: 97301840.1
(22) Date of filing: 19.03.1997
(51) Int. Cl.: B62K 25/28

(54) **Bicycle suspension**

(30) Priority: 22.03.1996 GB 9606063
(71) Applicant: ATB Sales Ltd., St. Leonards-on-Sea, East Sussex TN37 7PZ (GB)
(72) Inventor: Whyte, Jon, Greet, Gloucester GL54 5BT (GB)
(74) Representative: BROOKES & MARTIN

(57) **Abstract**

The present invention relates to bicycle suspension, particularly to a rear wheel suspension system. There is described, in one embodiment, a bicycle 10 having a frame and a rear suspension system; wherein the frame comprises a down tube 12, cross bar 11 top tube and seat tube 13. The rear wheel 15 is mounted at the rearward end of one or two swing arms each such swing arm being defined by a respective chain stay 18 and upper support arm 19. The upper support arm 19 is linked to the crossbar 11 through a shock-absorbing element 21. The suspension system further comprises a yoke 22 being pivotally linked at one end 24 thereof to the down tube 12 of the bicycle defining a lower pivot point; and at the other end 23 linked to the upper support arm(s) 19 at an upper pivot point between the shock-absorbing element 21 and the rear wheel mounting and forward of the down tube 13. The chain stay(s) 18 are mounted on the yoke 22 at a point intermediate the two ends thereof.

## Description

The present invention relates to bicycle suspension, particularly to a rear wheel suspension system.

Suspension systems for bicycles are commonplace. For the front wheels, they effectively consist of a rubber spring element or sprung hydraulic shock-absorber inserted along each of the front forks. Such an arrangement requires some modification for use on a rear wheel as the rear wheel is held in place between the corners of two triangles formed by the seat tube, two chain stays and two support arms. In addition to the shock-absorbing element, some degree of pivoting of the chain stays or support arms must be provided for. The pivoting 'triangles' are referred to in the art as 'swingarms'.

Several arrangements have been attempted. Examples include NZ 248420 wherein the chain stays are allowed to pivot, whilst the upper support arms are attached to one end of a bell crank, the other end of which is attached to one end of a shock absorber, the other end of which is attached to the down tube adjacent the bottom bracket.

US 5320375 describes an alternative arrangement wherein the chain stays are pivotally mounted upon the seat tube of the frame rather than the bottom bracket. The upper support arms are provided with one or more shock absorbers comprising an adjustable hydraulic piston member and resilient spring.

Such arrangements generally retain the appearance of a conventional bicycle frame. Alternative arrangements have been proposed, such as that in CA 2074273, in which there are no upper support arms. The chain stays, rather than pivoting about their usual junction - at the bottom bracket, are pivotally attached to the seat tube at a point considerably higher than the bottom bracket - typically about one quarter of the way up the seat tube. One or more shock absorbers are attached at one end thereof to the chain stays at a point from the junction with the seat tube approximately one quarter of the length of the chain stays. The other end of the shock absorber is attached to the cycle frame adjacent the junction of the seat tube and top tube or cross bar.

Experiments have found that on single pivot swingarm type suspension systems, the optimum pivot position is above and forward of the pedal crank centre. The existing designs fit into two general categories. Firstly are those suspension systems in which a straight seat tube is retained but the cross braces between the two swingarms, required to maintain lateral stability of the rear wheel, are positioned in front of the rear wheel but behind the seat tube. In these arrangements, if the chain stay length is to be maintained at a reasonably standard length, the suspension travel is necessarily limited by the proximity of the cross braces to the tube. However, the cross braces must have a gap maintained between them and the rear wheel to allow clearance for mud and so cannot be sited further rearwards. Thus there is a limit to the suspension that can be achieved.

In the second category are those in which, in order to facilitate assembly of the swingarm unit onto the main frame triangle (top tube, seat tube and down tube), the seat tube is interrupted, or curved. This necessitates an increase in the weight of the frame to achieve the same degree of stiffness and strength. Cross braces, required between the two swing arms for lateral wheel stability, are then sited in the area made clear by curving or interrupting the seat tube. Such arrangements also overcome the deficiencies of the first category - but with the increased weight disadvantage.

The present invention seeks to enable a straight uninterrupted seat tube to be retained, whilst also allowing a relatively large degree of suspension travel with a standard chain stay length.

In its broadest sense, the present invention provides a rear suspension system for a bicycle having a frame comprising a down tube, a cross bar or top tube, and a seat tube; wherein the rear wheel is mounted at the rear end of a swing arm having at the other end a transverse yoke being linked at one end to the down tube and at the other end, through a shock-absorbing element, to the top tube.

Preferably, there are two swing arms disposed either side of the rear wheel and down tube.

The swing arm(s) may comprise a solid sheet or plate. Alternatively, the swingarm(s) may comprise a generally triangular frame defined by a chain stay, an upper support arm and the transverse yoke.

In a specific embodiment, the present invention provides a bicycle having a frame and a rear suspension system; wherein the frame comprises a down tube, cross bar or top tube and seat tube; wherein the rear wheel is mounted at the rearward end of one or two swing arms each such swing arm being defined by a respective chain stay and upper support arm; wherein the upper support arm is linked to the crossbar or top tube of the bicycle through a shock-absorbing element; wherein the suspension system further comprises a yoke having two ends, the yoke being pivotally linked at one end thereof to the down tube of the bicycle defining a lower pivot point and at the other end linked to the upper support arms at an upper pivot point between the shock-absorbing element and the rear wheel mounting and forward of the seat tube; and further wherein the chain stays are mounted on the yoke at a point intermediate the two ends thereof.

Preferably, the chain stays are mounted upon the yoke at a point closer to the lower pivot point than the upper pivot point.

The present invention also provides a suspension system adapted to be mounted upon the frame of a bicycle to provide suspension to the rear wheel of the bicycle; the suspension system comprising two swingarms defined by a respective chain stay, respective upper support arm and a transverse yoke.

It has also been determined that full complement deep groove ball bearings provide advantageous results in the pivoting bearings of both the rear suspension system of the present invention and those of the prior art. The use of this type of ball bearing in the pivoting bearings of swing arm rear wheel suspension systems forms a further aspect of the present invention.

The above and other aspects of the present invention will now be described in further detail with reference to the accompanying drawings, in which:
Figure 1 shows, in side view, a conventional bicycle; and
Figure 2 shows, in part side view, an embodiment of a bicycle suspension system in accordance with the present invention.

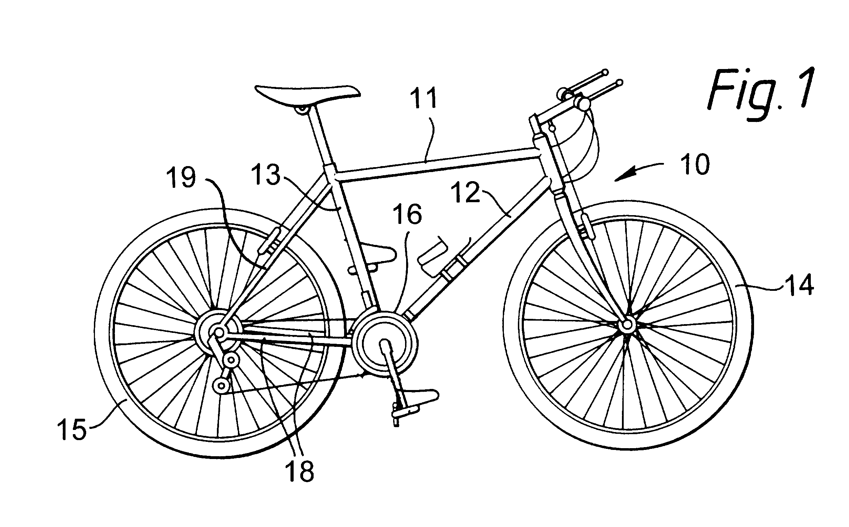

Referring to Figure 1, a conventional bicycle 10 comprises a frame including a crossbar or top tube 11, a down tube 12, a seat tube 13, front wheel 14, rear wheel 15, and chainset 16 through bottom bracket 17 (not visible in Figure 1). Rear wheel 15 is rotatably mounted between twin chain stays 18 and upper support arms 19.

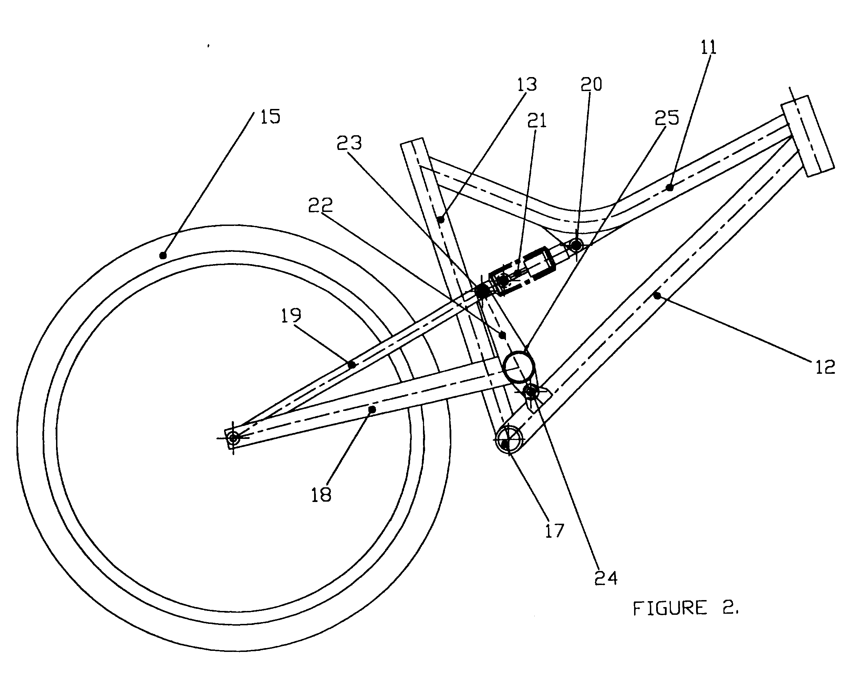

Referring to Figure 2, a bicycle including an embodiment of a suspension system in accordance with the present invention has a conventional down tube 12 and seat tube 13. The rear wheel is mounted between twin chain stays 18 and upper support arms 19 for rotation in a conventional manner. The ends of the upper support arms 19 remote from the rear wheel mounting point are pivotally linked a shock-absorbing element 21, in turn pivotally linked to the top tube 11 at a point 20. In the embodiment shown, top tube 11 is bent to reduce the length of the moving components. Alternative arrangements are clearly possible. Many suitable shock absorbing elements 21 will be apparent. Figure 2 illustrates a linear damper and spring combination.

Each chain stay 18 and upper support arm 19 forms a rigid triangle or swingarm with a yoke or rocker 22. The shock-absorbing element 21 and upper support arms 19 are pivotally mounted at their ends remote the top tube and wheel mounting respectively at one end 23 of the yoke 22 forming the upper pivot point. The other end of the yoke is pivotally linked to the down tube 12, typically by means of rotating bearings 24 (the lower pivot point). The chain stays 18 are mounted, by means of a transverse torque tube 25, upon the yoke 22 in such a manner as to prevent rotation with respect thereto and at a point intermediate the two ends of the yoke and thus forward of the down tube. Typically, the yoke comprises two yoke members separated by the transverse torque tube.

It has been determined that transverse torque tube 25 is preferably disposed towards the lower pivot point. That is to say, wherein the chain stays are mounted upon the yoke at a point closer to the lower pivot point than the upper pivot point.

The present invention provides lateral wheel stability by connecting the two swing arms together forward of the seat tube by means of the transverse torque tube 25, sited in close proximity to the lower pivot point and shown in side view in Figure 2.

With the rear wheel removed, the suspension system is readily assembled onto the bicycle frame by passing the swing arm on either side of the seat tube from the front of the main frame. Simple assembly is achieved by the absence, in this area, of the cross braces of the prior art.

The present invention achieves increased rear wheel suspension travel whilst substantially retaining standard chainstay lengths. The positioning of transverse torque tube 25 in close proximity to the lower pivot point gives increased transverse stiffness without an increase in weight by reducing the distance by which the yoke must pivot. The arrangement described gives increased clearance for mud in front of the rear tyre. In particular, the seat tube is left un-curved and uninterrupted, thus retaining strength and stiffness without the need to increase the thickness of the material from which the tube is made and thus increasing weight. A further weight saving is achieved as the transverse width of the damper/spring unit 21 at the swingarm end can be reduced as that part of the twin swingarm assembly onto which it is attached does not have to pass either side of the seat tube during movement.

With particular reference to Figure 2 and rotating bearings 24, it is observed that on any design of rear suspension which uses a swingarm which is pivoted at one point, the rigidity of the system is greatly affected by the amount of free play and the elastic deformation of the pivot bearings used. Also to give optimum suspension operation the bearings must offer very low friction when rotating or starting to rotate (stiction). Conventional existing bicycle suspension systems use:
1) Plain bush type bearings, which are lightweight but suffer from high friction/stiction and develop free play; or
2) Deep groove ball bearings with cages which because of the low number of balls used have a relatively low load capability for the size of the bearing used and are therefore heavy in weight. Such bearings are primarily designed for use in continuous rotation applications such as wheel bearings; or
3) Needle roller bearings which offer no axial support and therefore require additional thrust bearings which make the bearing package relatively large and heavy in weight.

Preferably the suspension system of the present invention uses a bearing of a type which is low in friction/stiction, has no free play and have very little elastic deformation under load, and is relatively small and light in weight. Such bearings have been used in the aircraft industry for applications where there is a high load and only a small oscillatory rotary motion and are known as "full complement deep groove ball bearings". These bearings are similar to the deep groove ball bearings described above except that they do not have cages and the races are crowded with balls. This makes them unsuitable for continuous rotation, but gives them extremely high load capabilities for their size and weight. Such bearings have the additional advantage of being easy to add a radial seal to in order to prevent the ingress of dirt and to prevent the escape of lubricant surrounding the balls.

Advantages of using these types of bearings in the present invention include:
They offer low levels of friction/stiction.
The offer good radial and axial support from a self contained unit.
They have very little free play and have very low levels of elastic deformation under load.
They are compact and lightweight.
They are available as sealed units making them suitable for dirty environments such as might be expected in, for example, mountain bicycles.

It will be apparent to those skilled in the art that many materials will be suitable for the manufacture of suspension systems in accordance with the present invention. Suitably, couplings to the frame of the bicycle will be made from the same metal, alloy or composite as the frame itself. Carbon fibre is particularly suitable for many uses, particularly because of its weight advantage.

## Claims

1. A bicycle rear suspension system for a bicycle (10) having a frame comprising a down tube (12), a cross bar or top tube (11), and a seat tube (13); wherein the rear wheel (15) is mounted at the rear end of a swing arm having at the other end a transverse yoke (22) being linked at one end (24) to the down tube and at the other end, through a shock-absorbing element (21), to the top tube (11).

2. A bicycle rear suspension system as claimed in Claim 1 coniprising two swing arms, each disposed on a respective side of the rear wheel (15) and down tube (12).

3. A bicycle rear suspension system as claimed in Claim 1 or Claim 2 wherein each swing arm comprises a generally triangular frame, defined by a chain stay (18), an upper support arm (19) and a transverse yoke (22) of the bicycle (10).

4. A bicycle rear suspension system as claimed in Claim 1 wherein the rear wheel (15) is mounted at the rearward end of one or two swing arms each such swing arm being defined by a respective chain stay (18) and upper support arm (19); wherein the upper support arm (19) is linked to the crossbar or top tube (11) of the bicycle (10) through a shock-absorbing element (21); wherein the suspension system further comprises a yoke (22) having two ends (23,24), the yoke (22) being pivotally linked at one end (24) thereof to the down tube (12) of the bicycle defining a lower pivot point and at the other end (23) linked to the upper support arms (19) at an upper pivot point between the shock-absorbing element (21) and the rear wheel mounting and forward of the seat tube (13); and further wherein the chain stays (18) are mounted on the yoke (22) at a point intermediate the two ends (23,24) thereof.

5. A bicycle rear suspension system as claimed in Claim 4 wherein the chain stays (18) are mounted upon the yoke (22) at a point closer to the lower pivot point (24) than the upper pivot point (23).

6. A bicycle rear suspension as claimed in Claim 4 or Claim 5 wherein the lower pivot point includes rotating bearings (24) of the full complement deep groove ball bearings type.

7. A bicycle rear suspension system as claimed in any one of Claims 1 to 6 wherein the shock-absorbing element comprises a linear damper and spring combination.

8. A bicycle (10) including a rear suspension system as claimed in any preceding claim.

9. The use, in a bicycle (10) having a frame and at least one pivoting swing arm carrying the rear wheel (15), of full complement deep groove ball bearings in the pivoting bearings between the frame and swing arm(s).
